# NEUE EUROPÄISCHE PATENTSCHRIFT

(11) **EP 2 686 413 B2**
(45) Veröffentlichungstag und Bekanntmachung des Hinweises auf die Entscheidung über den Einspruch: **25.12.2019**
(45) Hinweis auf die Patenterteilung: 28.12.2016
(21) Anmeldenummer: 12703982.4
(22) Anmeldetag: 11.02.2012
(51) Int. Cl.: C12C 11/11, C12H 1/02, C12H 1/04

(54) **VORRICHTUNG UND VERFAHREN ZUR STABILISIERUNG EINER FLÜSSIGKEIT, INSBESONDERE BIER**
APPARATUS AND PROCESS FOR STABILIZING A LIQUID, ESPECIALLY BEER
DISPOSITIF ET PROCÉDÉ SERVANT À STABILISER UN LIQUIDE, EN PARTICULIER DE LA BIÈRE

(30) Priorität: 16.03.2011 DE 102011014184
(43) Veröffentlichungstag der Anmeldung: 22.01.2014
(73) Patentinhaber: KHS GmbH, 44143 Dortmund (DE)
(72) Erfinder: SANDER, Ulrich, 67549 Worms (DE); ZELLER, Andreas, 55543 Bad Kreuznach (DE)
(86) Internationale Anmeldenummer: PCT/EP2012/000620
(87) Internationale Veröffentlichungsnummer: WO 2012/123059

(56) Entgegenhaltungen:
- EP-A1- 1 949 948
- WO-A1-2008/068343
- US-A- 3 551 203

## Beschreibung

Die Erfindung bezieht sich auf ein Verfahren zur Stabilisierung einer Flüssigkeit, insbesondere Bier gemäß dem Oberbegriff des Patentanspruches 1.

Für Verbraucher ist eine Trübung von Bier unakzeptabel, obwohl in den meisten Fällen dadurch die Haltbarkeit nicht beeinträchtigt ist. Die Trübung wird durch eine chemische Reaktion von im Bier enthaltenen Stoffen, insbesondere polyphenolischen Verbindungen und/oder bestimmten Proteinfraktionen ausgelöst. Zur Entfernung derartiger polyphenolischer Verbindungen aus Bier sind aus dem Stand der Technik diverse mehrstufige Verfahren bekannt. Hierbei werden dem Bier vor der eigentlichen Entfernung der polyphenolischen Verbindungen zunächst Hefen und Trübstoffe mittels Filtration entzogen. Der Prozess der Entfernung der polyphenolischen Verbindungen und/oder bestimmten Proteinfraktionen aus dem Bier wird auch als Stabilisierung des Bieres bezeichnet.

Im Rahmen des eigentlichen Stabilisierungsprozesses wird das Bier dann zunächst mit einem Stabilisierungsmittel in Kontakt gebracht, welches einen bevorzugten Reaktionspartner für die polyphenolischen Verbindungen und/oder bestimmten Proteinfraktionen darstellt. Hierbei werden im Wesentlichen Verfahren mit verlorenen Stabilisierungsmitteln von Verfahren mit der Möglichkeit der Regeneration des Stabilisierungsmittels unterschieden. Als Stabilisierungsmittel findet in der Praxis häufig Polyvinylpolypyrrolidon Verwendung. Durch die einsetzende chemische Reaktion werden die Polyphenole an das Polyvinylpolypyrrolidon gebunden und somit aus dem Bier entfernt, wodurch die Bildung von Trübungen auch bei längerer Lagerdauer des Bieres nahezu vollständig verhindert, zumindest jedoch aber stark reduziert werden kann.

Der Grad der Entfernung der Polyphenole aus dem Bier bzw. der Bierstabilisierung ist von einer Vielzahl von Faktoren abhängig, von besonderer Bedeutung hierbei sind die Menge des zugesetzten Stabilisierungsmittels, die Anzahl der freien Adsorptionsstellen des Stabilisierungsmittels und die Länge der Kontaktzeit des Bieres mit dem Stabilisierungsmittel. Dabei ist es bekannt, durch geeignete Wahl und Auslegung der Komponenten einer Stabilisierungsvorrichtung beispielsweise hinsichtlich Tankvolumen, Strömungsgeschwindigkeiten usw., die gesamte Stabilisierungsvorrichtung derart auszulegen, dass hinreichende Kontaktzeiten zwischen dem Stabilisierungsmittel, beispielsweise Polyvinylpolypyrrolidon und den zu entfernenden Bierbestandteilen und somit auch hinreichende Stabilisierungsgrade erzielt werden können.

Auch ist zu berücksichtigen, dass die stabilisierende Wirkung des Stabilisierungsmittels Polyvinylpolypyrrolidon oder anderer geeigneter Stabilisierungsmittel mit zunehmender Kontakt- oder Einwirkzeit abnimmt. Dies ist darauf zurückzuführen, dass die vorhandenen Adsorptionsstellen des Stabilisierungsmittels immer stärker gesättigt werden. In diesem Zusammenhang ist es ebenfalls bekannt, während der Zufuhr von zu stabilisierendem Bier diesem näherungsweise zeitgleich frisches Stabilisierungsmittel zuzusetzen, so dass stets eine ausreichende Anzahl von unbesetzten Adsorptionsstellen vorhanden ist. Das Stabilisierungsmittel Polyvinylpolypyrrolidon wird vorzugsweise regeneriert, und zwar beispielsweise mittels Natronlauge.

Hat das Bier nun den gewünschten Stabilisierungsgrad erzielt, so werden das Stabilisierungsmittel und das Bier wieder voneinander getrennt, um eine Überstabilisierung bzw. die mit einer solchen Überstabilisierung verbundenen erhöhten Kosten zu vermeiden. Zur Trennung des Stabilisierungsmittels vom Bier werden in der Praxis Filtereinheiten, sogenannte Anschwemmfilter verwendet. Dabei wird das der zu filtrierenden Flüssigkeit zugesetzte Stabilisierungsmittel oder vorher angeschwemmtes Stabilisierungsmittel verwendet, welches gegen die Filterfläche angeschwemmt wird. Bei Durchtritt der zu filtrierenden Flüssigkeit durch die angeschwemmte Stabilisierungsmittelschicht wird die Flüssigkeit filtriert. Zur Anschwemmfiltration werden Horizontalfilter und sogenannte Kerzenfilter eingesetzt.

Ein Horizontalfiltern weist mehrere in einem Filterkessel auf einer Aufnahme übereinander angeordnete Filterscheiben auf, auf deren Oberseite die Schicht aus Filterhilfsmittel angeschwemmt wird. Bei Durchtritt der Flüssigkeit durch die Filterschicht, typischerweise eine Schicht aus Kieselgur erfolgt die Filtration. Die dadurch filtrierte Flüssigkeit gelangt in das Innere der Scheiben und wird vom Inneren der Scheiben durch eine zentrale Leitung abgeführt.

Bei sogenannten Kerzenfiltern ist in einem Filterkessel eine Trennwand vorgesehen, welche den Filterkessel in einen Unfiltrat- und in einen Filtratraum trennt. Senkrecht zur Ebene der Trennwand sind Filterkerzen angeordnet, welche sich in den Unfiltratraum erstrecken. Die Filterkerzen weisen eine mit Öffnungen versehene Oberfläche auf. Der Aufbau und die Funktionsweise derartiger Anschwemmfiltereinheiten ist beispielsweise der EP 1 380 332 A1 zu entnehmen. Nachteilig gestaltet sich jedoch die Reinigung derartiger Filterkerzen, insbesondere bei der Verwendung eines Stabilisierungsmittels schlechter Qualität äußerst schwierig und es kann bei der Reinigung aufgrund der erhöhten mechanischen Belastungen zu einer Beschädigung der gesamten Filtereinheit kommen.

In der Praxis sind derartige Stabilisierungssysteme häufig Bestandteil einer größeren Produktionsanlage. Genannte Produktionsanlagen sind beispielsweise zum Filtern, Stabilisieren, Abfüllen und Verpacken von flüssigen Produkten, beispielsweise Bier ausgebildet, wobei alle Anlagenkomponenten vorzugsweise in Reihe geschaltet sind, d.h. ein betriebs- oder störungsbedingter Ausfall einer Anlagenkomponente führt zu einem Ausfall der gesamten Produktionsanlage. Es hat sich gezeigt, dass bei derartigen Anlagen die Anlagenkomponente betreffend die Stabilisierung, insbesondere die Regeneration des Stabilisierungsmittels häufig den Grund für die unerwünschten Ausfälle oder Produktionsunterbrechungen der gesamten Anlage darstellt. Hierdurch entstehen neben einem hohen Zeitverlust auch enorme zusätzliche Betriebs- und Wartungskosten.

Zur Lösung dieses Problems wurde bereits vorgeschlagen, zwei oder mehr Stabilisierungsanlagen parallel zueinander anzuordnen, um so eine kontinuierliche Stabilisierung zu ermöglichen. Diese Lösungen befriedigen aufgrund der hohen Anlagekosten jedoch nicht.

Ebenfalls ist aus der EP 1 949 948 A1 eine Stabilisierungsanlage zur kontinuierlichen Behandlung von Flüssigkeiten bekannt, bei der als Stabilisierungsmittel Polyvinylpolypyrrolidon Anwendung findet, dessen regelmäßige Regeneration erforderlich ist. Zur Regeneration wird vorgeschlagen mindestens drei gleichartig aufgebaute Filtereinheiten zu verwenden, wobei jede einzelne dieser Filtereinheiten im Laufe eines Produktionszyklusses als Filter, Regeneralionsbehälter und auch als Vorlagegefäß dient. Diese Vorgehensweise bedingt einen großen Anlegenaufwand, und ist hinsichtlich der Steuerung der Gesamtanlage vergleichsweise kompliziert.

Ebenfalls bekannt wurde eine Vorrichtung nach der WO 2008/068343 A1. Die in dieser Schrift beschriebene Erfindung bezieht sich auf eine Vorrichtung zur kombinierten Filtration und Stabilisierung einer Flüssigkeit. Dabei ist mehr im Detail vorgesehen, dass ein Stabilisierungsmittel der zu stabilisierenden Flüssigkeit mittels eines herkömmlichen Dosier-Tank-Systems zugesetzt wird. Weiterhin ist vorgesehen, dass die vorhandenen Anlagenkomponenten, beispielsweise Dosiersysteme, Speichersystem für Filterhilfsmittel und Filtereinheiten in wechselnder Kombination miteinander verbunden werden können.

Aufgabe der Erfindung ist ein Verfahren zur und ist hinsichtlich der Steuerung der Gesamtanlage vergleichsweise kompliziert.

Aufgabe der Erfindung ist eine Vorrichtung und ein Verfahren zur Stabilisierung einer Flüssigkeit, insbesondere Bier anzugeben, welches einen effizienteren Stabllislerungsprozess aufweist, insbesondere bei geringen Investitionskosten eine hohe Durchsatzmenge ermöglicht. Zur Lösung dieser Aufgabe ist ein Verfahren entsprechend dem Patentanspruch 1 ausgebindet

Eine Besonderheit der anmeldungsgemäßen Vorrichtung besteht darin, dass Verbindungs- und Schaltmittel vorgesehen sind, über welche jeweils eine Filtereinheit unmittelbar nach deren Regenerations- und Reinigungsphase der weiteren Filtereinheit vorschaltbar ist. Besonders vorteilhaft kann damit die Filtereinheit unmittelbar nach ihrer Regenerations- und Reinigungsphase zur Stabilisierung der Flüssigkeit, insbesondere von Bier verwendet werden.

Hierzu sind besonders vorteilhaft die Filtereinheiten als Anschwemmfiltereinheiten ausgebildet, welche als zeitlich zueinander versetzte Betriebsphasen eine Anschwemmphase, eine Stabilislerungsphase und eine Regenerations- und Reinigungsphase aufweisen. Vorteilhaft erfolgt bereits in der Anschwemmphase einer Filtereinheit eine Reihenschaltung mit mindestens einer, der übrigen In der Stabilisierungsphase befindlichen Filtereinheiten, d.h. die jeweils die in der Anschwemmphase befindliche Filtereinheit ist der zumindest einen in der Stabilisierurigsphase befindlichen Filtereinheit vorgeschaltet.

Die in der Stabilisierungsphase befindlichen Filtereinheiten sind vorzugsweise parallel zueinander geschaltet, um hierdurch eine möglichst hohe Durchsatzmenge zu gewährleisten.

In der Regenerations- und Reinigungsphase ist die jeweilige Filtereinheit von der Eingangsleitung getrennt, d.h. während dieser Phase werden der jeweiligen Filtereinheit weder Flüssigkeit noch Stabilisierungsmittel zusätzlich zugeführt.

In der Stabilisierungsphase ist eine zur Stabilisierung der unstabilisierten Flüssigkeit ausreichende Menge an Stabilisierungsmittel angeschwemmt.

Die Verbindungs- und Schaltmittel sind vorzugsweise durch Verbindungsleitungen und zugehörige Ventile gebildet, wobei der Ausgang der ersten Filtereinheit über eine erste Verbindungsleitung und ein Ventil mit dem Eingang der zweiten Filtereinheit verbunden ist und der Ausgang der zweiten Filtereinheit über eine zweite Verbindungsleitung und ein Ventil mit dem Eingang der ersten Filtereinheit verbunden ist.

Eine Besonderheit des erfindungsgemäßen Verfahrens ist darin zu sehen, dass jeder Filtereinheit unmittelbar nach der Regenerations- und Reinigungsphase erneut unstabilisierte Flüssigkeit mit zugesetzten Stabilisierungsmittel zugeführt wird. Damit wird die üblicherweise für den Betrieb der Filtereinheit erforderliche Anschwemmphase verkürzt. Hierzu wird jede Filtereinheit vorteilhaft in zumindest drei zeitlich versetzten Betriebsphasen betrieben, und zwar in einer Anschwemmphase, einer Stabilisierungsphase und einer Regenerations- und Reinigungsphase. In der Anschwemmphase wird die Filtereinheit durch die Zuführung der unstabilisierten Flüssigkeit mit zugesetzten Stabilisierungsmittel angeschwemmt.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an mehreren Ausführungsbeispielen näher erläutert. Es zeigen:
- Fig. 1: beispielhaft ein schematisches Blockschaltbildes eine Vorrichtung zur Stabilisierung einer Flüssigkeit;
- Fig. 2: beispielhaft ein schematisches Blockschaltbildes der Vorrichtung bei Vorschaltung der ersten Filtereinheit;
- Fig. 3: beispielhaft ein schematisches Blockschaltbildes der Vorrichtung bei Vorschaltung der zweiten Filtereinheit;
- Fig. 4: beispielhaft ein schematisches Blockschaltbildes einer Vorrichtung zur Stabilisierung einer Flüssigkeit umfassend drei Filtereinheiten;
- Fig. 5: beispielhaft ein schematisches Betriebsdiagramm betreffend eine Vorrichtung mit drei Filtereinheiten;
- Fig. 6: beispielhaft ein alternatives Betriebsdiagramm und
- Fig. 7: beispielhaft ein weiteres alternatives Betriebsdiagramm.

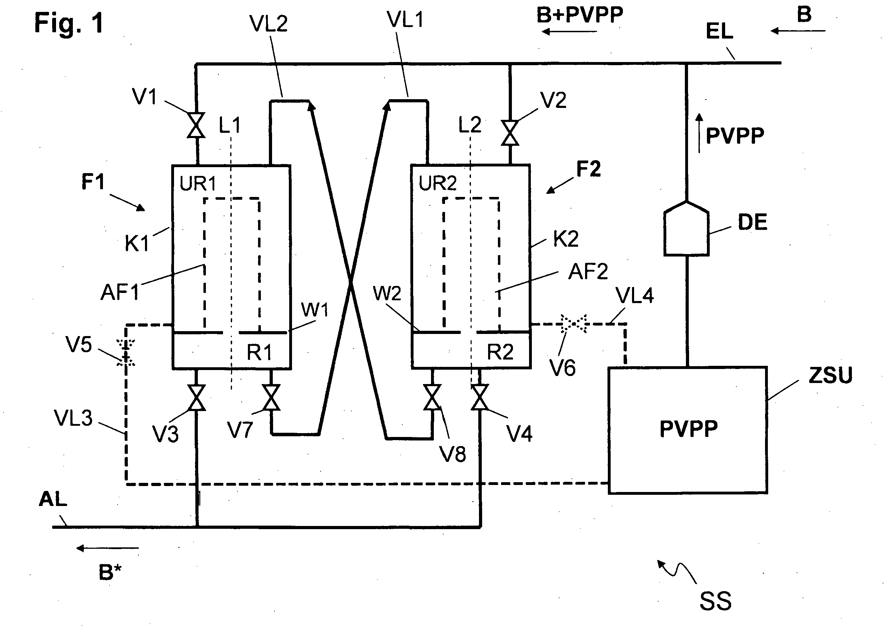

In Figur 1 ist beispielhaft eine Vorrichtung SS zur Stabilisierung einer Flüssigkeit B, insbesondere Bier in einem schematischen Blockschaltbild dargestellt. Unter Stabilisierung im erfindungsgemäßen Sinne wird hierbei die Entfernung pholyphenolischer Verbindungen und/oder bestimmter Proteinfraktionen aus der zu stabilisierenden Flüssigkeit B, insbesondere Bier verstanden, wobei durch die pholyphenolischen Verbindungen und/oder Proteinfraktionen eine Kälte- oder Dauertrübung in der Flüssigkeit B, insbesondere Bier ausgelöst wird.

Die Vorrichtung SS besteht zumindest aus einer ersten Filtereinheit F1 und zumindest einer zweiten Filtereinheit F2 sowie zumindest einer Zwischenspeichereinheit ZSU zur Aufnahme eines regenerierbaren Stabilisierungsmittels, insbesondere Polyvinylpolypyrrolidon (PVPP).

Die erste und zweite Filtereinheit F1, F2 sind im Wesentlichen baugleich und vorzugsweise in Form von Filtermodulen ausgebildet.

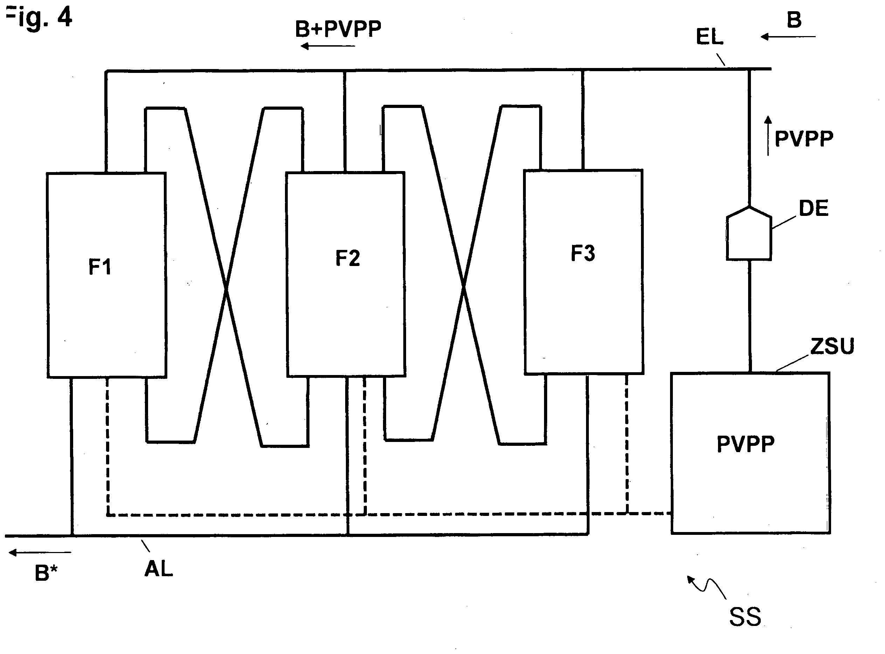

Alternativ können auch zusätzlich zur ersten und zweiten Filtereinheit F1, F2 noch weitere Filtereinheiten, insbesondere eine dritte Filtereinheit F3 vorgesehen sein. Fig. 4 zeigt beispielsweise in einem schematischen Ausführungsbeispiel eine Ausführungsvariante mit drei Filtereinheiten F1, F2, F3. Im Folgenden wird das anmeldungsgemäße Prinzip lediglich beispielhaft für die Ausführungsvariante mit zwei Filtereinheiten F1, F2 beschrieben.

Die Vorrichtung SS umfasst ferner eine Eingangsleitung EL zur Zuführung der noch zu stabilisierenden Flüssigkeit B, insbesondere Bier an die erste und/oder zweite Filtereinheit F1, F2 sowie eine Ausgangsleitung AL zur Abführung der stabilisierten Flüssigkeit B*. Die Eingangsleitung EL ist über ein erstes Ventil V1 mit dem Eingang der ersten Filtereinheit F1 und über ein zweites Ventil V2 mit dem Eingang der zweiten Filtereinheit F2 verbunden. Analog hierzu ist die Ausgangsleitung AL über ein drittes Ventil V3 mit dem Ausgang der ersten Filtereinheit F1 und über ein viertes Ventil V4 mit dem Ausgang der zweiten Filtereinheit F2 angeschlossen.

Ferner ist der Ausgang der Zwischenspeichereinheit ZSU über eine Dosiereinheit DE an die Eingangsleitung EL angeschlossen und über ein fünftes Ventil V5 mit dem Ausgang der ersten Filtereinheit F1 sowie über ein sechstes Ventil V6 mit dem Ausgang der zweiten Filtereinheit F2 verbunden. Über die Dosiereinheit DE wird der über die Eingangsleitung EL transportierten unstabilisierten Flüssigkeit B in an sich bekannter Weise das Stabilisierungsmittel, insbesondere Polyvinylpolypyrrolidon (PVPP) zugesetzt und die unstabilisierte Flüssigkeit B mit zugesetztem Stabilisierungsmittel PVPP anschließend über die Eingangsleitung EL der ersten und/oder zweiten Filtereinheit F1, F2 zugeführt.

Anmeldungsgemäß sind Verbindungs- und Schaltmittel zur Reihenschaltung der ersten und zweiten Filtereinheit F1, F2 vorgesehen, und zwar im vorliegenden Ausführungsbeispiel eine erste und zweite Verbindungsleitung VL1, VL2 und ein jeweils zum Durchschalten der Verbindungsleitungen VL1, VL2 vorgesehenes siebtes bzw. achtes Ventil V7, V8. Abhängig vom Betriebszustand der ersten und zweiten Filtereinheit F1, F2 wird entweder die erste Filtereinheit F1 der zweiten Filtereinheit F2 vorgeschaltet oder vice versa.

Mittels der ersten Verbindungsleitung VL1 ist der Ausgang der ersten Filtereinheit F1 mit dem Eingang der zweiten Filtereinheit F2 und mittels der zweiten Verbindungsleitung VL2 der Ausgang der zweiten Filtereinheit F2 mit dem Eingang der ersten Filtereinheit F1 verbindbar. Durch Öffnen des siebten Ventils V7 ist eine Verbindung zwischen dem Ausgang der ersten Filtereinheit F1 und dem Eingang der zweiten Filtereinheit F2 und durch Öffnen des achten Ventils V8 eine Verbindung zwischen dem Ausgang der zweiten Filtereinheit F2 und dem Eingang der ersten Filtereinheit F1 herstellbar.

Bei einer Reihenschaltung der ersten und zweiten Filtereinheit F1, F2 sind somit das erste, siebte und vierte Ventil V1, V7, V4 geöffnet und das zweite, dritte und achte Ventil V2, V3, V8 geschlossen. Analog hierzu sind bei einer Reihenschaltung der zweiten und ersten Filtereinheit F2, F1 das zweite, dritte und achte Ventil V2, V3, V8 geöffnet und das erste, siebte und vierte Ventil V1, V7, V4 geschlossen.

Sämtliche in den Figuren dargestellten Ventile V1 bis V8 sind vorzugsweise über eine zentrale Steuereinheit (in den Figuren nicht dargestellt) steuerbar, so dass ein automatisierter Betrieb des Systems SS möglich ist.

Die erste und zweite Filtereinheit F1, F2 sind bevorzugt als so genannte Anschwemmfiltereinheiten ausgebildet, bei denen zur Bereitstellen der vollständigen Filterfunktion ein so genanntes Anschwemmen der Filtereinheiten F1, F2 mit einem Filterhilfsmittel erforderlich ist.

Die erste und zweite Filtereinheit F1, F2 weisen beispielsweise einen ersten bzw. zweiten Filterkessel K1, K2 auf, der vorzugsweise im Wesentlichen zylinderförmig ausgebildet ist. Im ersten bzw. zweiten Filterkessel K1, K2 ist jeweils eine erste bzw. zweite Trennwand W1, W2 vorgesehen, welche den ersten bzw. zweiten Filterkessel K1, K2 in einen ersten bzw. zweiten Filtratraum R1, R2 und einen ersten bzw. zweiten Unfiltratraum UR1, UR2 trennt.

Die erste bzw. zweite Trennwand W1, W2 sind zur Aufnahme zumindest eines säulenartigen ersten bzw. zweiten Anschwemmfilters AF1, AF2 ausgebildet, welche sich ausgehend von der ersten bzw. zweiten Trennwand W1, W2 entlang der jeweiligen Längsachse L1, L2 der ersten und zweiten Filtereinheit F1, F2 in den Unfiltratraum UR1, UR2 erstrecken.

Zur Bereitstellung der Filterfunktion werden die Anschwemmfilter AF1, AF2 der ersten und zweiten Filtereinheit F1, F2 mit einem Filterhilfsmittel beaufschlagt, und zwar so lange, bis die Oberfläche des ersten und zweiten Anschwemmfilters AF1, AF2 nahezu vollständig mit dem Filterhilfsmittel bedeckt ist und die hierdurch entstehende Filterschicht zusammen mit der Wandung des säulenartigen Anschwemmfilter AF1, AF2 die Filterfunktion erzeugt.

Im vorliegenden Ausführungsbeispiel wird als Filterhilfsmittel das regenerierbare Stabilisierungsmittel Polyvinylpolypyrrolidon (PVPP) verwendet, welches zur Stabilisierung der unstabilisierten Flüssigkeit B vorgesehen ist. Nach der Regeneration des in der jeweiligen Filtereinheit F1, F2 enthaltenen Stabilisierungsmittels PVPP wird das regenerierte Stabilisierungsmittel PVPP aus der Filtereinheit F1, F2 über die dritte bzw. vierte Verbindungsleitung VL3, VL4 ausgetragen und der Zwischenspeichereinheit ZSU zugeführt. Die Filtereinheit F1, F2 wird nach dem Austragen des regenerierten Stabilisierungsmittels PVPP gereinigt und steht anschließend nach erfolgtem Durchlaufen der Anschwemmphase erneut zur Stabilisierung und Filterung zur Verfügung.

Nach dem Anschwemmen der Filtereinheit F1, F2 wird weiteres Stabilisierungsmittel PVPP über die Eingangsleitung EL zusammen mit der unstabilisierten Flüssigkeit B dem jeweiligen Unfiltratraum UR1, UR2 der ersten bzw. zweiten Filtereinheit F1, F2 zugeführt. Über das derartig "angeschwemmte" erste und zweite Anschwemmfilter AF1, AF2 erfolgt dann eine Stabilisierung der unstabilisierten Flüssigkeit B, und zwar werden das Stabilisierungsmittel PVPP zusammen mit den darin gebundenen polyphenolischen Verbindungen und/oder weiteren Proteinfraktionen ausgefiltert. In den Filtratraum R1, R2 des ersten und zweiten Filtereinheit F1, F2 gelangt damit lediglich die stabilisierte Flüssigkeit B*, welche über die Ausgangsleitung AL abgeführt wird.

Derartige Anschwemmfilter weisen demgemäß im Wesentlichen drei Betriebsphasen auf, und zwar eine Anschwemmphase, eine Stabilisierungsphase S und eine Regenerationsphase R. In der Anschwemmphase ist eine vollständige Stabilisierung der Flüssigkeit B noch nicht möglich, da noch keine ausreichende Menge an Stabilisierungsmittel PVPP im Unfiltratraum UR1, UR2 sowie auf der Oberfläche der Anschwemmfilter AF1, AF2 vorliegt. Ist eine ausreichende Konzentration an Stabilisierungsmittel PVPP in der Filtereinheit F1, F2 vorhanden, so befindet sich die Filtereinheit F1, F2 in der Stabilisierungsphase. Sind nahezu sämtliche Resorbtionsstellen des in der vollständig mit Stabilisierungsmittel PVPP gefüllten Filtereinheit F1, F2 verbraucht, so ist eine Regeneration der Filtereinheit F1, F2 erforderlich, d.h. in der Regenerationsphase wird das Stabilisierungsmittel PVPP regeneriert und aus der Filtereinheit F1, F2 ausgetragen.

Aus dem Stand der Technik bekannte Filtereinheiten F1, F2 weisen häufig pro Filtereinheit F1, F2 mehrere säulenförmige Anschwemmfilter AF1, AF2 auf, welche vorzugsweise konzentrisch zur Längsachse L1, L2 der jeweiligen Filtereinheit F1, F2 angeordnet sind. Nachteilig entstehen dadurch unvermeidliche Leer- oder Zwischenräume zwischen den einzelnen Anschwemmfiltern innerhalb einer Filtereinheit F1, F2, welche zu einem geringen Trubvolumen führen. Das Trubvolumen der Filtereinheiten F1, F2 dient jedoch zur Aufnahme des Stabilisierungsmittels PVPP und beeinflusst damit unmittelbar den Stabilisierungsprozess, d.h. das durch eine Filtereinheit F1, F2 aufnehmbare Volumen des Stabilisierungsmittels PVPP hat direkte Auswirkungen auf die Einsatzdauer eines Anschwemmfilters AF1, AF2 zwischen den erforderlichen Regenerationsphasen.

In einer bevorzugten Ausführungsvariante weisen die erste und zweite Filtereinheit F1, F2 anstelle mehrerer Anschwemmfilter lediglich ein säulenförmiges Anschwemmfilter AF1, AF2 pro Filtereinheit F1, F2 auf, welches vorzugsweise zylinderförmig ausgebildet ist und konzentrisch zur Längsachse L1, L2 der jeweiligen Filtereinheit F1, F2 angeordnet ist. Hierdurch wird das Trubvolumen der ersten und zweiten Filtereinheit F1, F2 erhöht und damit auch die Einsatzdauer zwischen zwei Regenerationsvorgängen deutlich verbessert.

Die Filtereinheiten F1, F2 können solange zur Stabilisierung der unstabilisierten Flüssigkeit B verwendet werden bis das Trubvolumen der ersten bzw. zweiten Filtereinheit F1, F2 vollständig mit Stabilisierungsmittel PVPP befüllt ist. Dann sind eine Regeneration des Stabilisierungsmittels PVPP und eine Reinigung der Filtereinheit F1, F2 erforderlich. Hierbei wird die jeweils zu reinigende Filtereinheit F1, F2 von der Eingangsleitung EL durch Schließen des entsprechenden Ventils V1, V2 getrennt. Zur Regeneration des im Unfiltratraum UR1, UR2 befindlichen Stabilisierungsmittel PVPP wird beispielsweise eine 1 - 1,5 prozentige Natronlauge mit einer Temperatur von etwa 85°C verwendet. Ist die Regeneration des in Filtereinheit F1, F2 befindlichen Stabilisierungsmittels PVPP abgeschlossen, so wird dieses aus der Filtereinheit F1, F2 ausgetragen und über die jeweilige Verbindungsleitung VL3, VL4 der Zwischenspeichereinheit ZSU zugeführt und steht damit zur erneuten Verwendung wieder zur Verfügung.

In diesem Zusammenhang ist es von besonderer Bedeutung, dass die Regeneration des in einer Filtereinheit F1, F2 befindlichen Stabilisierungsmittels PVPP ca. eine Zeitdauer von einer 1 Stunde in Anspruch nimmt, jedoch das Anschwemmen der Anschwemmfilter AF1, AF2 der Filtereinheiten F1, F2 mit dem Stabilisierungsmittel PVPP und anschließende Stabilisieren mehrere Stunden benötigt. Das vollständige Befüllen der jeweiligen Filtereinheit F1, F2 mit dem Stabilisierungsmittel PVPP kann beispielsweise über 4 Stunden betragen, wobei die genannte Zeitdauer in Abhängigkeit vom Trubvolumen der Filtereinheit F1, F2 und von der Menge des je Hektoliter zu dosierenden Stabilisierungsmittels PVPP deutlich variieren kann. Grundsätzlich ist jedenfalls der Zeitbedarf für eine Regeneration einer Filtereinheit F1, F2 stets geringer als der Zeitbedarf für eine vollständige Befüllung des Trubvolumens einer Filtereinheit F1, F2 mit dem Stabilisierungsmittel PVPP.

Bei bekannten Verfahren wird daher die jeweilige Filtereinheit F1, F2 erst dann mit der zu stabilisierenden Flüssigkeit B, insbesondere Bier beaufschlagt, wenn die Filtereinheit F1, F2 bereits angeschwemmt ist.

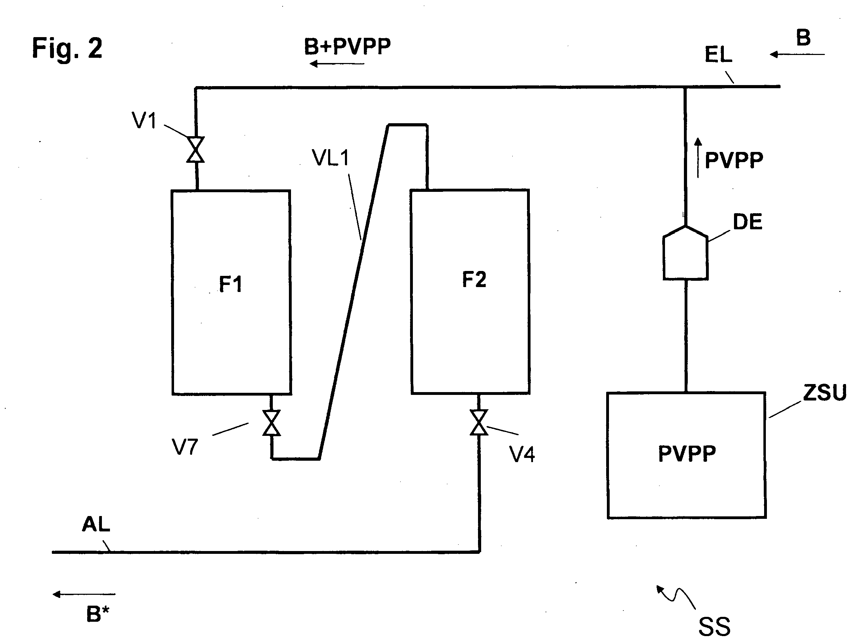

Hier setzt die vorliegende Erfindung an, und schlägt vor, bei einem zeitversetzten Betrieb der beiden Filtereinheiten F1, F2 jeweils eine Filtereinheit F1 unmittelbar nach dessen Regeneration und Reinigung, d.h. bereits in der Anschwemmphase wieder zur Stabilisierung zu verwenden. Hierzu wird die noch nicht angeschwemmte Filtereinheit F1 in Serie mit der zweiten, bereits angeschwemmten Filtereinheit F2 betrieben, d.h. die zu stabilisierende Flüssigkeit B und das zugesetzte Stabilisierungsmittel PVPP werden zunächst der ersten Filtereinheit F1 zugeführt und führen dort zum allmählichen Anschwemmen der ersten Filtereinheit F1. In Figur 2 ist beispielhaft ein Blockschaltbild des erfindungsgemäßen Systems SS dargestellt, und zwar lediglich diejenigen Verbindungsleitungen, welche in der Anschwemmphase der ersten Filtereinheit F1 die zu stabilisierende Flüssigkeit B führen. Die verbleibenden Verbindungsleitungen sind in Figur 2 aus Gründen der Übersichtlichkeit nicht dargestellt.

In der Anschwemmphase wird in der ersten Filtereinheit F1 das Stabilisierungsmittel PVPP aus der teilweise stabilisierten Flüssigkeit B ausgefiltert und die teilweise stabilisierte Flüssigkeit B der zweiten, in der Stabilisierungsphase befindlichen Filtereinheit F2 zur vollständigen Stabilisierung zugeführt. Dort wird die teilweise stabilisierte Flüssigkeit B einer weiteren Stabilisierung unterzogen und somit eine vollständig stabilisierte Flüssigkeit B* erzeugt.

Die erste Filtereinheit F1 wird der zweiten Filtereinheit F2 solange vorgeschaltet und beide Filtereinheiten F1, F2 in Serie betrieben, bis die erste Filtereinheit F1 vollständig angeschwemmt ist und unabhängig von der zweiten Filtereinheit F2 betrieben werden kann. Dann wird die Reihenschaltung getrennt und beide Filtereinheiten F1, F2 wieder parallel zueinander betrieben. Daraus ergibt sich der Vorteil einer deutlich gesteigerten Durchsatzmenge gemessen in "Hektoliter stabilisierter Flüssigkeit B* pro Stunde". Ferner ist auch während der Anschwemmphase der ersten Filtereinheit F1 sichergestellt, dass weder das Stabilisierungsmittel PVPP noch die nicht ausreichend stabilisierte Flüssigkeit B zur weiteren Verwendung gelangt.

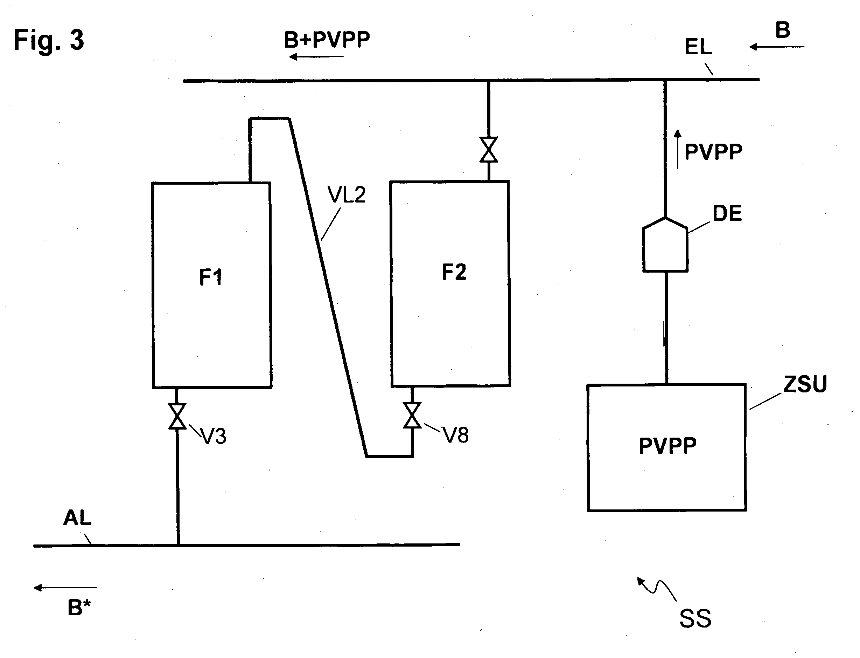

Während der in der Stabilisierungsphase befindlichen Filtereinheiten F1, F2 wird fortlaufend Stabilisierungsmittel PVPP mit der zu stabilisierenden Flüssigkeit B in die parallel zueinander betriebenen Filtermodule F1, F2 eingetragen. Entsprechend dem erfindungsgemäßen Verfahren ist die zweite Filtereinheit F2 eine erhebliche Zeitspanne vor der ersten Filtereinheit F1 vollständig mit Stabilisierungsmittel PVPP gefüllt, welche nun einer Regeneration und anschließenden Reinigung zu unterziehen ist. Die zweite Filtereinheit F2 wird durch Schließen des zweiten Ventils V2 von der Zufuhr der zu stabilisierenden Flüssigkeit B mit dem zugesetzten Stabilisierungsmittel PVPP getrennt und steht nun für die Regeneration des darin enthaltenen Stabilisierungsmittels PVPP zur Verfügung. Ist das in der zweiten Filtereinheit F2 enthaltene Stabilisierungsmittel PVPP regeneriert, so wird es aus der zweiten Filtereinheit F2 ausgetragen und über die vierte Verbindungsleitung VL4 in die Zwischenspeichereinheit ZSU überführt. Anschließend wird die zweite, noch nicht angeschwemmte Filtereinheit F2 der ersten, angeschwemmten Filtereinheit F1 vorgeschaltet und beide Filtereinheiten F1, F2 solange in Serie betrieben, bis die zweite Filtereinheit F2 erneut vollständig angeschwemmt ist. Schließlich werden beide Filtereinheiten F1, F2 wieder parallel zueinander betrieben. In Figur 3 ist beispielhaft die Vorrichtung SS mit vorgeschalteter zweiter Filtereinheit F2 dargestellt.

In einem alternativen Ausführungsbeispiel kann zur Erhöhung der Durchsatzmengenleistung zusätzlich zu der ersten und der zweiten Filtereinheit F1, F2 eine dritte Filtereinheit F3 vorgesehen sein. Hierbei werden die drei Filtereinheiten F1, F2, F3 zeitversetzt zueinander betreiben, zumindest zwei der drei Filtereinheiten F1, F2, F3 zwar zeitversetzt zueinander betrieben, wobei sich aber jeweils zeitgleich mindestens zwei Filtereinheiten in der Stabilisierungsphase befinden. Hierdurch kann die Durchsatzmengenleistung erheblich gesteigert werden. Beispielsweise ist auch eine Verdoppelung der Durchsatzmengenleistung möglich.

Analog zum zuvor beschriebenen Ausführungsbeispiel mit zwei Filtermodulen F1, F2 durchlaufen die drei Filtermodule F1, F2, F3 auch bei dieser Ausführungsvariante kontinuierlich und ständig wiederholen, identische Abläufe, und zwar wird jeweils die regenerierte und gereinigte Filtereinheit zum Anschwemmen zumindest einer den bereits angeschwemmten Filtereinheiten vorgeschaltet und nach erfolgten Anschwemmen dieser Filtereinheit die Stabilisierung mit fortgesetzter Anschwemmung in Parallelschaltung mit den bereits angeschwemmten Filtereinheiten betrieben. Diejenige Filtereinheit, welche vollständig mit Stabilisierungsmittel gefüllt ist wird regeneriert und das regenerierte Stabilisierungsmittel ausgetragen. Anschließend erfolgen eine Reinigung dieser Filtereinheit und ein erneutes Anschwemmen in Reihenschaltung mit zumindest einer der in der Stabilisierungsphase S befindlichen Filtereinheit.

Hierbei werden die einzelnen Filtereinheiten F1, F2, F3 derart betrieben, dass die zeitgleich in den Filtereinheiten F1, F2, F3 ablaufenden Prozessphasen einen ausreichenden zeitlichen Versatz zueinander aufweisen, so dass zu jedem Zeitpunkt immer mindestens zwei Filtereinheiten F1, F2, F3 zur Stabilisierung der Flüssigkeit B zur Verfügung stehen. Dabei ist beispielsweise vorgesehen, dass sich stets zumindest in zwei Filtereinheiten F1, F2 in der Stabilisierungsphase S befinden, d.h. zumindest zwei Filtereinheiten zur Stabilisierung der Flüssigkeit B zur Verfügung stehen. Die jeweils dritte Filtereinheit F3 befindet sich in der Regenerationsphase R oder wird bereits ebenfalls zur Stabilisierung verwendet.

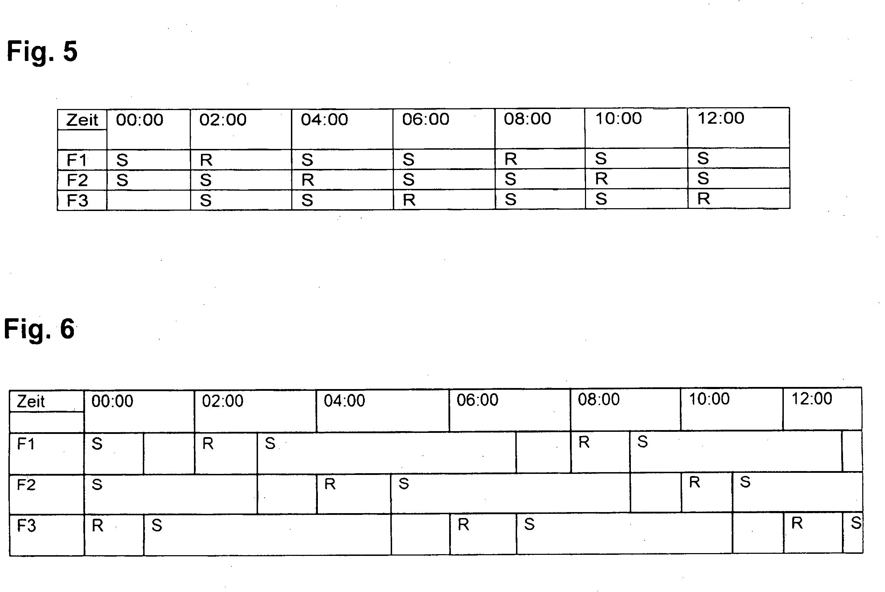

Dabei ist zum einen vorgesehen, dass sich die dritte Filtereinheit F3 so lange in einem Bereitschaftszustand befindet, bis eine der weiteren beiden Filtereinheiten F1, F2 nahezu vollständig mit Stabilisierungsmittel PVPP gefüllt ist. Ist dieser Zustand erreicht, so wird die wartende Filtereinheit F3 zunächst, wie zuvor beschrieben, den weiteren beiden Filtereinheiten F1, F2 vorgeschaltet und damit angeschwemmt. Nach erfolgtem Anschwemmen wird die dritte, angeschwemmte Filtereinheit F3 ebenfalls zur Stabilisierung verwendet, wobei die vollständig mit Stabilisierungsmittel PVPP gefüllte Filtereinheit mit der Inbetriebnahme der dritten Filtereinheit unverzüglich in die Regenerationsphase R übergeht. Bei dieser Vorgehensweise ergibt sich in vereinfachter Darstellung das in Figur 5 dargestellte Betriebsdiagramm, welche die jeweiligen Betriebsphasen der ersten bis dritten Filtereinheit F1 bis F3 zu unterschiedlichen Zeitpunkten zeigt, wobei die unterschiedlichen Betriebsphasen von den Filtereinheiten F1, F2, F3 jeweils zeitversetzt angenommen werden. Hierbei folgt beispielsweise auf eine 2 stündige Regenerationsphase R jeweils eine 4 stündige Stabilisierungsphase S.

Durch das erfindungsgemäße unmittelbare Beaufschlagen der jeweiligen Filtereinheit F1, F2, F3 nach Austragen des regenerierten Stabilisierungsmittels PVPP und Reinigung mit der zu stabilisierenden Flüssigkeit mit dem zugesetzten Stabilisierungsmittel PVPP in Reihenschaltung mit zumindest einer der in der Stabilisierungsphase befindlichen Filtereinheiten wird die Dauer der Regenerationsphase R um näherungsweise die Hälfte reduziert. Dadurch lässt sich eine weitere Steigerung der Durchsatzmengenleistung erreichen. In Figur 6 ist in einer vereinfachten Darstellung ein entsprechendes Betriebsdiagramm dargestellt.

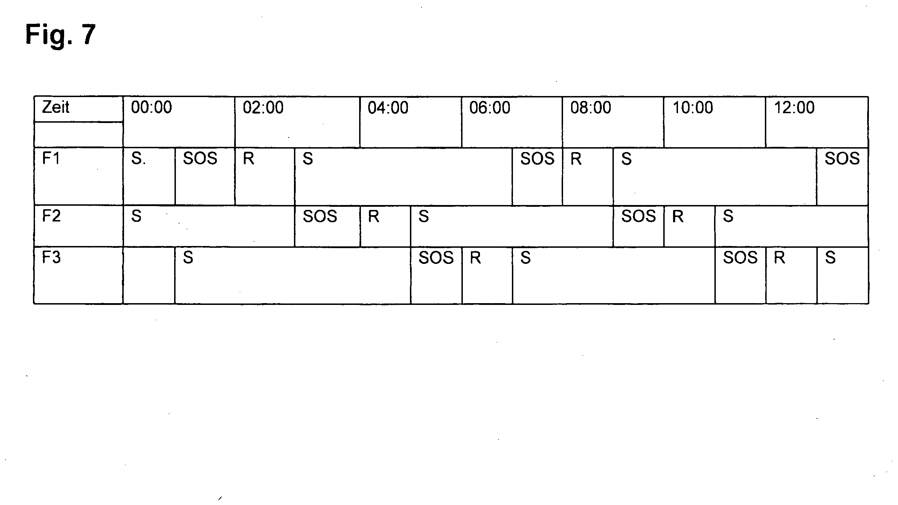

Als besonders vorteilhaft wurde eine weitere Betriebsart erkannt, bei welcher die bestehende Reihenschaltung zwischen der regenerierten, noch nicht angeschwemmten Filtereinheit und der bereits vollständig mit Stabilisierungsmittel PVPP gefüllten Filtereinheit so lange aufrecht erhalten wird, bis nahezu alle Resorbtionsstellen des in der vollständig mit Stabilisierungsmittel PVPP gefüllten Filtereinheit befindlichen Stabilisierungsmittels PVPP belegt oder verbraucht sind. Durch die weiterhin bestehende Reihenschaltung wird besonders vorteilhaft kein weiteres Stabilisierungsmittel PVPP in die bereits vollständig mit Stabilisierungsmittel PVPP gefüllte Filtereinheit mehr eingetragen. Bei dem in Fig. 7 dargestellten Betriebsdiagramm ist diese zusätzliche Betriebsphase einer Filtereinheit F1, F2, F3 mit dem Kurzzeichen SOS bezeichnet, d.h. eine "Stabilisierungsphase ohne weiteren Stabilisierungsmittel-Eintrag" bezeichnet.

Besonders vorteilhaft an dieser Vorgehensweise ist, dass die durch die Regeneration des Stabilisierungsmittels PVPP wieder aktivierten Resorbtionsstellen des Stabilisierungsmittels PVPP vollständig dazu benutzt werden, die unerwünschten Stoffe aus der zu stabilisierenden Flüssigkeit, insbesondere Bier zu entfernen, wodurch eine vorzeitige Regeneration des Stabilisierungsmittels PVPP und die mit einer vorzeitigen Regeneration verbundenen Kosten vermieden sind.

Vorstehend wurde diese Betriebsart beispielhaft an drei Filtereinheiten dargestellt, doch es versteht sich von selbst, dass diese Betriebsart auch bei Verwendung von zwei oder mehreren Filtereinheiten anwendbar ist.

Es versteht sich ebenfalls von selbst, dass je nach Betriebsart und/oder Anschwemmschichtdicke in einem oder mehreren Filtermodulen und/oder strömungstechnischer Verschaltung der Filtermodule miteinander, unterschiedliche oder auch gleiche Differenzdrücke innerhalb oder auch für die einzelnen Filtermodule eingestellt oder vorgegeben werden müssen, wozu beispielsweise Regelventile verwendet werden können. Da dieser Sachverhalt für den Fachmann selbstverständlich ist, kann hier auf eine ausführliche Darlegung dieser Sachverhalte verzichtet werden.

### Bezugszeichenliste

- AF1: erstes Anschwemmfilter
- AF2: zweites Anschwemmfilter
- AL: Ausgangsleitung
- B: unstabilisierte Flüssigkeit, insbesondere Bier
- B*: stabilisierte Flüssigkeit
- DE: Dosiereinheit
- EL: Eingangsleitung
- F1: erste Filtereinheit
- F2: zweite Filtereinheit
- K1: erster Filterkessel
- K2: zweiter Filterkesse
- L1: erste Längsachse
- L2: zweite Längsachse
- PVPP: Stabilisierungsmittel
- R: Regenerations- und Reinigungsphase
- R1: erster Filtratraum
- R2: zweiter Filtratraum
- S: Stabilisierungsphase
- SOS: Stabilisierungsphase ohne weiteren Stabilisierungsmittel-Eintrag
- SS: Vorrichtung
- UR1: erster Unfiltratraum
- UR2: zweiter Unfiltratraum
- V1: erstes Ventil
- V2: zweites Ventil
- V3: drittes Ventil
- V4: viertes Ventil
- V5: fünftes Ventil
- V6: sechstes Ventil
- V7: siebtes Ventil
- V8: achtes Ventil
- VL1: erste Verbindungsleitung
- VL2: zweite Verbindungsleitung
- VL3: dritte Verbindungsleitung
- VL4: vierte Verbindungsleitung
- W1: erste Trennwand
- W2: zweite Trennwand
- ZSU: Zwischenspeichereinheit

## Patentansprüche

1. Verfahren zur Stabilisierung einer Flüssigkeit (B), insbesondere Bier, bei dem der unstabilisierten Flüssigkeit (B) ein Stabilisierungsmittel, insbesondere Polyvinylpolypyrrolidon (PVPP) zugesetzt wird, und anschließend die unstabilisierte Flüssigkeit (B) mit zugesetzten Stabilisierungsmittel zumindest einer ersten und zweiten, jeweils als Anschwemmfiltereinheit ausgebildeten, Filtereinheit (F1, F2) zur Stabilisierung der unstabilisierten Flüssigkeit (B) und zum Entfernen des Stabilisierungsmittels aus der stabilisierten Flüssigkeit (B*) zugeführt wird,
wobei jede der Anschwemmfiltereinheiten (F1, F2) in wenigstens drei zeitlich versetzten Betriebsphasen, und zwar in einer Anschwemmphase, einer Stabilisierungsphase (S) und einer Regenerations- und Reinigungsphase (R) betrieben wird,
wobei die erste und zweite Filtereinheiten (F1, F2) in zeitlich zueinander versetzten unterschiedlichen Betriebsphasen betrieben werden, **dadurch gekennzeichnet, dass** jeder Filtereinheit (F1, F2) unmittelbar nach der Regenerations- und Reinigungsphase (R) erneut unstabilisierte Flüssigkeit (B) mit zugesetzten Stabilisierungsmittel zugeführt wird, und zwar derart, dass bei dem zeitversetzten Betrieb der ersten und zweiten Filtereinheiten (F1, F2) jeweils eine der Filtereinheiten (F1, F2) unmittelbar nach deren Regenerations- und Reinigungsphase (R), nämlich bereits in der Anschwemmphase wieder zur teilweisen Stabilisierung der unstabilisierten Flüssigkeit (B) verwendet wird, wobei die teilweise stabilisierte Flüssigkeit, die in der in der Anschwemmphase befindlichen Filtereinheit (F1, F2) erzeugt wird, zur vollständigen Stabilisierung der anderen Filtereinheit (F1, F2) zugeführt wird, die sich in der Stabilisierungsphase befindet.

2. Verfahren nach Anspruch 1, **dadurch gekennzeichnet, dass** in der Anschwemmphase die Filtereinheit (F1, F2) durch die Zuführung der unstabilisierten Flüssigkeit (B) mit zugesetzten Stabilisierungsmittel angeschwemmt wird.

3. Verfahren nach Anspruch 1 oder 2, **dadurch gekennzeichnet, dass** in einer zusätzlichen Betriebsphase (SOS) die bereits vollständig mit Stabilisierungsmittel gefüllte Filtereinheit (F3) ohne weitere Zuführung von Stabilisierungsmittel in Reihenschaltung mit einer in der Anschwemmphase (S) befindlichen Filtereinheit (F1, F2) betrieben wird.

## Claims

1. Method for stabilising a liquid (B), in particular beer, wherein a stabilising agent, in particular polyvinylpolypyrrolidone (PVPP), is added to the unstabilised liquid (B), and the unstabilised liquid (B) with the added stabilising agent is then delivered to at least one first and second filter unit (F1, F2), each configured as a wash filter unit, for stabilising the unstabilised liquid (B) and for removing the stabilising agent from the stabilised liquid (B*),
with each of the wash filter units (F1, F2) being operated in at least three temporally offset operating phases, specifically in a wash phase, a stabilising phase (S) and a regeneration phase and cleaning phase (R),
with the first and second filter units (F1, F2) being operated in different operating phases, temporally offset to one another, **characterised in that** immediately after the regeneration phase and cleaning phase (R), unstabilised liquid (B) with added stabilising agent is again delivered to each filter unit (F1, F2), and in such a way that, in the case of the temporally offset operation of the first and second filter units (F1, F2), one of the filter units (F1, F2) is used again immediately after its regeneration phase and cleaning phase (R), namely already in the wash phase, for the partial stabilising of the unstabilised liquid (B), with the partially stabilised liquid generated in the filter unit (F1, F2) which is in the wash phase being delivered for complete stabilising to the other filter unit (F1, F2) which is in the stabilising phase.

2. Method of claim 1 **characterised in that**, in the wash phase, the filter unit (F1, F2) is washed by the delivery of the unstabilised liquid (B) with added stabilising agent.

3. Method of claim 1 or 2 **characterised in that**, in an additional operating phase (SOS), the filter unit (F3) already completely filled with stabilising agent is operated, without further delivery of stabilising agent, in series connection with a filter unit (F1, F2) which is in the wash phase (S).

## Revendications

1. Procédé servant à stabiliser un liquide (B), en particulier de la bière, dans le cadre duquel un agent de stabilisation, en particulier de la polyvinylpyrrolidone (PVPP), est ajouté au liquide (B) non stabilisé et le liquide (B) non stabilisé comprenant un agent de stabilisation ajouté est ensuite amené au moins à une première et à une deuxième unité de filtration (F1, F2) réalisées respectivement en tant qu'unité de filtration de pré-dépôt servant à stabiliser le liquide (B) non stabilisé et servant à supprimer l'agent de stabilisation du liquide (B*) stabilisé,
dans lequel chacune des unités de filtration de pré-dépôt (F1, F2) fonctionne au cours d'au moins trois phases de fonctionnement décalées dans le temps, et ce dans une phase de pré-dépôt, une phase de stabilisation (S) et une phase de régénération et de nettoyage (R),
dans lequel les première et deuxième unités de filtration (F1, F2) fonctionnent au cours de phases de fonctionnement différentes décalées les unes par rapport aux autres dans le temps, **caractérisé en ce qu'**un liquide (B) non stabilisé comprenant un agent de stabilisation ajouté est amené à nouveau à chaque unité de filtration (F1, F2) directement après la phase de régénération et de nettoyage (R), et ce de telle manière qu'en cas de fonctionnement décalé dans le temps des première et deuxième unités de filtration (F1, F2) respectivement une des unités de filtration (F1, F2) est utilisée directement après sa phase de régénération et de nettoyage (R), à savoir déjà dans la phase de pré-dépôt à nouveau pour la stabilisation partielle du liquide (B) non stabilisé, dans lequel le liquide partiellement stabilisé qui est généré dans l'unité de filtration (F1, F2) se trouvant dans la phase de pré-dépôt, est amené pour la stabilisation complète à l'autre unité de filtration (F1, F2) qui se trouve dans la phase de stabilisation.

2. Procédé selon la revendication 1, **caractérisé en ce que** l'unité de filtration (F1, F2) est déposée lors de la phase de pré-dépôt par l'amenée du liquide (B) non stabilisé comprenant un agent de stabilisation ajouté.

3. Procédé selon la revendication 1 ou 2, **caractérisé en ce que** lors d'une phase de fonctionnement (SOS) supplémentaire, l'unité de filtration (F3) déjà remplie en totalité avec l'agent de stabilisation fonctionne, en étant montée en série avec une unité de filtration (F1, F2) se trouvant dans la phase de pré-dépôt (S), sans amenée supplémentaire d'agent de stabilisation.
